# EUROPEAN PATENT SPECIFICATION

(11) **EP 1 329 797 B1**
(45) Date of publication and mention of the grant of the patent: **21.09.2016**
(21) Application number: 01978822.3
(22) Date of filing: 17.10.2001
(51) Int. Cl.: G06F 1/16, G09F 9/40

(54) **PORTABLE COMPUTER**
TRAGBARER COMPUTER
ORDINATEUR PORTABLE

(30) Priority: 18.10.2000 JP 2000318632
(43) Date of publication of application: 23.07.2003
(73) Proprietor: Joalister Fram AB, L.L.C., Dover, DE 19904 (US)
(72) Inventor: Titukawa, Yoshiji, Osaka-shi, Osaka 547-0033 (JP)
(74) Representative: Ablett, Graham Keith
(86) International application number: PCT/JP2001/009129
(87) International publication number: WO 2002/033526

(56) References cited:
- EP-A- 1 037 132
- JP-A- 6 266 469
- JP-A- 6 266 469
- JP-A- 8 263 174
- JP-A- 8 263 174
- JP-A- 10 063 195
- JP-A- 10 063 195
- JP-A- 2000 284 852

## Description

### FIELD OF THE INVENTION

The present invention relates to a portable computer that comprises a computer body and a lid with an inner face, with the inner face having a liquid crystal display formed therein, wherein the lid is capable of being pivotally folded onto and opened away from the computer body.

### BACKGROUND OF THE INVENTION

Recently, portable telephones have been made smaller and smaller in size to be more convenient to carry. On the other hand, supplementary functions have been added to the normal ones of each portable computer serving as a terminal output equipment for receiving information through INTERNET and/or from the like data source.

EP 1 037 132 A2 discloses a device comprising a personal computer with a conventional housing and a first display but with an additional display fastened to the computer by a fastening device. The fastening device enables the second display to move sideways, vertically or rotationally with respect to the first display so that it can be swung out into a position where other people can view it. When not in use the extra screen can be folded away for carrying.

JP 2000-284852 A discloses a computer having a main display and a sub-display which may be drawn out of the computer on a supporting substrate by means of a knob.

JP 8263174 A discloses a information processor having a liquid crystal display as a main display and a further subordinate display. The subordinate display is stored below the keyboard and revealed by moving the keyboard away from the main body horizontally.

JP 10063195 A discloses plural independent display units which are respectively attachably/detachably bonded to another to obtain a display device having one larger screen, which is fixed and connected to a cover part.

### SUMMARY OF THE INVENTION

According to an aspect of the present invention, there is provided a portable computer comprising: a computer body, a lid with an inner face having a first liquid crystal display disposed therein; a hinge connecting the computer body to the lid, wherein the lid is capable of being folded onto the computer body and opened away from the computer body, and the lid has an upper edge, a first lateral edge, and a second lateral edge; characterised in that the portable computer further comprises: a second liquid crystal display able to be accommodated in the computer body and capable of being pulled out sideways therefrom, and being separable from the computer body and detachably attachable to the lid by a fixing means provided on one of the upper edge, the first lateral edge, or the second lateral edge, such that the first liquid crystal display and the second liquid crystal display extend in a single common plane.

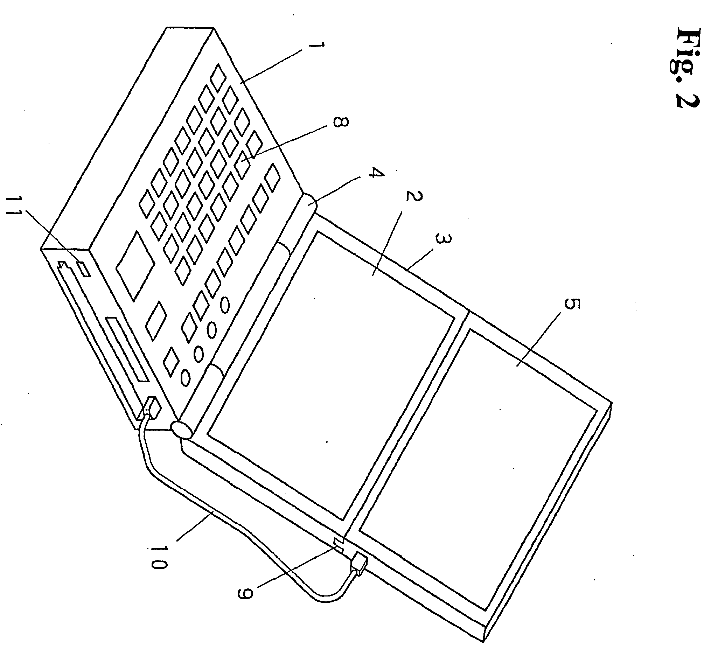

For example, an upper edge of the first display may serve for connection of second display, by a dovetail groove or the like means as shown in Fig. 2. In this state, the main display of the computer body and the supplementary one are included in one and the same plane so as to form a larger and integral displaying area.

A primary advantage of embodiments of the present invention is to provide a portable computer that has a second liquid crystal display in addition to a conventional liquid crystal display, such that whilst the computer can operate as usual and as it is, the second display that has been stored in the computer body may be pulled out and exposed to form together with the conventional display an extended displaying area.

### BRIEF DESCRIPTION OF THE DRAWINGS

In order to better understand the claimed invention, and to show how the same may be put into effect, reference will now be made, by way of example only, to the accompanying drawings, in which:
Fig. 1 is a perspective view of a portable computer provided in a first embodiment of the present invention;
Fig. 2 is a perspective view of the computer of Fig. 1 shown in use;
Fig. 3 is a perspective view of a portable computer provided in a second embodiment of the present invention; and
Fig. 4 is a perspective view of the computer of Fig. 3 shown in use.

### DETAILED DESCRIPTION OF THE INVENTION

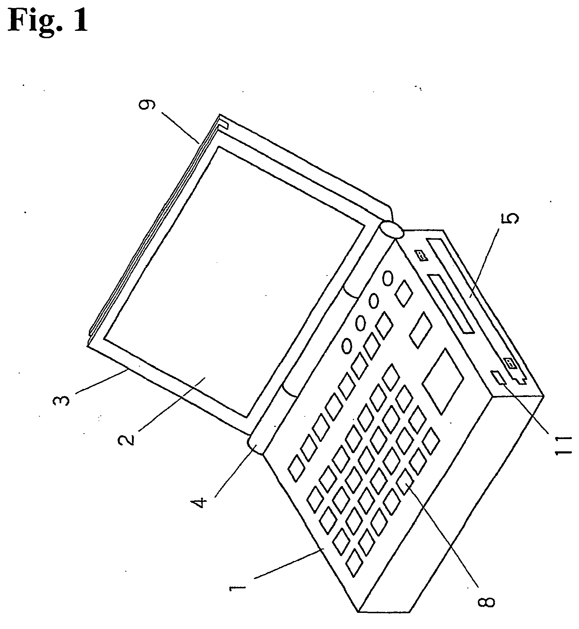

Structural features of the present invention will now be exemplified by referring to embodiments shown in the drawings. Figs. 1 and 2 illustrate a portable computer provided in a first embodiment, wherein the reference numeral 1 generally denotes a computer body. A hinge 4 connects this computer body to a lid 3, rendering it foldable onto the upper face said body. A first or main liquid crystal display 2 is formed in the inner face of the lid 3, and a plurality of manipulative buttons 8 and the like are disposed in the upper face of computer body 1, all similarly to the conventional portable computers.

A second or supplementary liquid crystal display 5 accommodated in the computer body 1 can be pulled out from a side thereof, if and when necessary. The second display 5 in this embodiment is a discrete member fully separable from the computer body. A dovetail groove or the like fixing means 9 will be used to detachably attach the second display 5 to the upper edge of first display 2. The first and second liquid crystal displays 2 and 5 thus combined with each other do extend in a single and common plane to provide a united and enlarged image-displaying area. The reference numeral 10 in Fig. 2 denotes a link cable for electrically connecting the first display 2 of computer body 1 to the second display 5. An ejection button 11 disposed in the computer body is preferably used to mechanically eject the second display, though it may be pulled out manually.

If the portable computer is used for the purpose of word processing, then only the first display 2 will work as shown in Fig. 1 because it suffices well to treat with data of a relatively small volume as in the conventional cases. If in contrast any information of a much larger volume is to be displayed, then the second display 5 withdrawn from the computer body 1 will be combined with the first display 2 to thereby form a large-scaled integral display area.

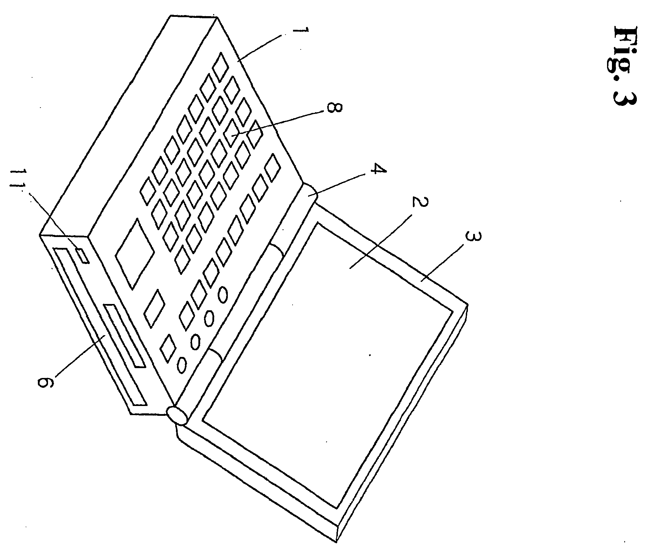

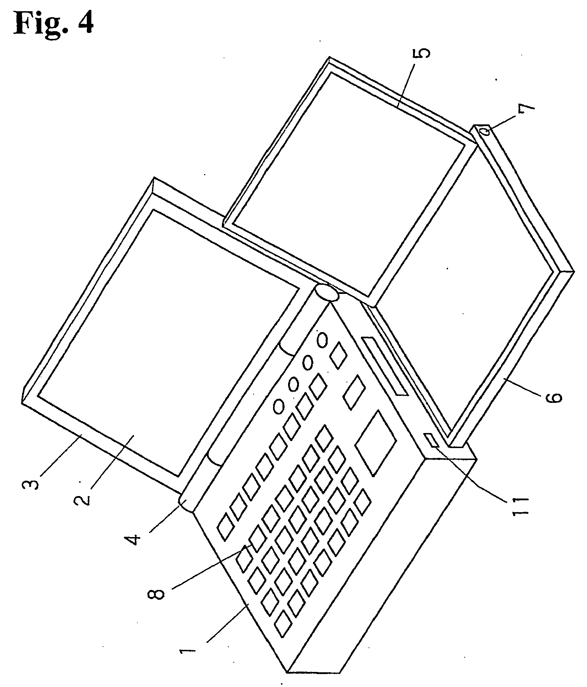

Figs. 3 and 4 show a second embodiment, wherein a tray-shaped drawer 6 is accommodated in the side of computer body 1 and the second display 5 is mounted on such a drawer 6. The drawer 6 has a hinge 7 lying in parallel with the first-mentioned hinge 4 so that the second display 5 can be operated to rotate up and tilt down relative to the drawer. At a raised position of the second display 5 thus raised will be set at the same angle as that at which the first liquid crystal display 2 is positioned relative to the computer body 1. Also in this embodiment, only the first display 2 will work as shown in Fig. 3 if and when the portable computer is used for the purpose of word processing treating with data of a relatively small volume as in the conventional cases. If contrarily any information of a much larger volume is to be displayed, then the second display 5 will be caused to to take its raised position cooperating with the first display 2 to thereby form a large-scaled integral display area. Also in this embodiment, an ejection button 11 disposed in the computer body is preferably used to mechanically eject the drawer 6 carrying the second display 5, though it may manually be pulled out.

The representative embodiments of the invention described above do not delimit the scope thereof. For example, the dovetail structure shown in Figs. 1 and 2 for connection of the second display 5 to the first one 2 of computer body 1 may be replaced with any proper steel fastener or the like. Further, the second display 5 may not necessarily be disposed above the upper edge the computer body's first display 2 but may be arranged side by side to either lateral side edge of thereof. The embodiments may further be modified in many manners, provided that the invention is defined by the appended claims.

### ADVANTAGES OF THE INTENTION

The first display may solely work if and when the portable computer is used to perform the word processing or the like work treating with data of a relatively small volume as in the conventional cases. If contrarily any information of a much larger volume including characters and/or figures is to be displayed simultaneously, then the second display may be withdrawn to cooperate with the first display of computer body to thereby form a large-scaled integral display area.

## Claims

1. A portable computer comprising:
a computer body (1),
a lid (3) with an inner face having a first liquid crystal display (2) disposed therein;
a hinge (4) connecting the computer body (1) to the lid (3), wherein the lid can be folded onto the computer body and opened away from the computer body (1), and the lid has an upper edge, a first lateral edge, and a second lateral edge;
a second liquid crystal display (5) which can be accommodated in the computer body (1) and can be pulled out sideways therefrom, **characterised in that** said second liquid crystal display is separable from the computer body (1) and detachably attachable to the lid (3) by a fixing means provided on one of the upper edge, the first lateral edge, or the second lateral edge, such that the first liquid crystal display (2) and the second liquid crystal display (2) extend in a single common plane.

2. The portable computer according to any preceding claim, wherein the second liquid crystal display (5) is separable from the computer body (1) by being pulled out from a side of the computer body.

3. The portable computer according to any preceding claim, wherein the fixing means comprises a dovetail groove.

4. The portable computer according to any preceding claim, wherein the second liquid crystal display is attachable to the lid such that the first liquid crystal display and the second liquid crystal display provide a united image displaying area.

5. The portable computer according to claim 4, wherein the computer comprises a link for electrically connecting the first liquid crystal display to the second liquid crystal display.

## Patentansprüche

1. Ein tragbarer Computer, der Folgendes aufweist:
ein Computer-Gehäuse (1),
eine Klappe (3) mit einer Innenfläche, die ein darin untergebrachtes erstes Flüssigkristall-Display (2) umfasst;
ein Scharnier (4), das das Computer-Gehäuse (1) mit der Klappe (3) verbindet, wobei die Klappe auf das Computer-Gehäuse geklappt und weg vom Computer-Gehäuse (1) wieder geöffnet werden kann, die Klappe hat dabei einen oberen Rand, einen ersten Seitenrand und einen zweiten Seitenrand;
ein zweites Flüssigkristall-Display (5), das im Computer-Gehäuse (1) untergebracht und seitlich herausgezogen werden kann,
**dadurch gekennzeichnet, dass** das zweite Flüssigkristall-Display vom Computer-Gehäuse (1) abtrennbar ist und abnehmbar an der Klappe (3) über eine Befestigungsvorrichtung befestigt werden kann, die entweder am oberen Rand, dem ersten Seitenrand oder dem zweiten Seitenrand angebracht ist, so dass das erste Flüssigkristall-Display (2) und das zweite Flüssigkristall-Display (2) in einer einzelnen gemeinsamen Ebene liegen.

2. Der tragbare Computer gemäß eines der vorhergehenden Ansprüche, wobei das zweite Flüssigkristall-Display (5) vom Computer-Gehäuse (1) durch Herausziehen aus einer Seite des Computer-Gehäuses abtrennbar ist.

3. Der tragbare Computer gemäß eines der vorhergehenden Ansprüche, wobei die Befestigungsvorrichtung eine Schwalbenschwanznut aufweist.

4. Der tragbare Computer gemäß eines der vorhergehenden Ansprüche, wobei das zweite Flüssigkristall-Display so an der Klappe befestigt werden kann, dass das erste Flüssigkristall-Display und das zweite Flüssigkristall-Display einen verbundenen Bilddarstellungsbereich bieten.

5. Der tragbare Computer gemäß Anspruch 4, wobei der Computer einen Anschluss aufweist, um das erste Flüssigkristall-Display elektrisch mit dem zweiten Flüssigkristall-Display zu verbinden.

## Revendications

1. Un ordinateur portable comprenant :
Un corps d'ordinateur (1),
un couvercle (3) comportant une face intérieure présentant un premier écran d'affichage à cristaux liquides (2) situé dans celui-ci ;
une charnière (4) reliant le corps de l'ordinateur (1) au couvercle (3), dans lequel le couvercle peut être rabattu sur le corps d'ordinateur et ouvert hors du corps de l'ordinateur (1) et le couvercle présente un bord supérieur, un premier bord latéral et un second bord latéral ;
un second écran d'affichage à cristaux liquides (5) qui peut être logé dans le corps de l'ordinateur (1) et peut être retiré sur le côté à partir de celui-ci,
**caractérisé en ce que** ledit second écran d'affichage à cristaux liquides est séparable du corps de l'ordinateur (1) et peut être fixé de façon amovible au couvercle (3) par un moyen de fixation fourni sur un des bords supérieurs, le premier bord latéral ou le second bord latéral, de manière que le premier écran d'affichage à cristaux liquides (2) et le second écran d'affichage à cristaux liquides (2) s'étendent dans un plan commun unique.

2. L'ordinateur portable selon une quelconque revendication précédente, dans lequel le second écran d'affichage à cristaux liquides (5) est séparable du corps de l'ordinateur (1) en étant retiré depuis un côté du corps de l'ordinateur.

3. L'ordinateur portable selon une quelconque revendication précédente, dans lequel le moyen de fixation comprend une rainure en queue d'aronde.

4. L'ordinateur portable selon une quelconque revendication précédente, dans lequel le second écran d'affichage à cristaux liquides peut être fixé au couvercle de manière que le premier écran d'affichage à cristaux liquides et le second écran d'affichage à cristaux liquides offrent une surface d'affichage d'image unifiée.

5. L'ordinateur portable selon la revendication 4, dans lequel l'ordinateur comprend une liaison destinée à connecter électriquement le premier écran d'affichage à cristaux liquides au second écran d'affichage à cristaux liquides.
